# EUROPEAN PATENT SPECIFICATION

(11) **EP 3 138 387 B1**
(45) Date of publication and mention of the grant of the patent: **13.06.2018**
(21) Application number: 16001928.7
(22) Date of filing: 02.09.2016
(51) Int. Cl.: A01G 9/06

(54) **DEVICE AND METHOD FOR CLEANING PLANT POTS**
VORRICHTUNG UND VERFAHREN ZUM REINIGEN VON PFLANZENTÖPFEN
DISPOSITIF ET PROCÉDÉ DE NETTOYAGE DE POTS DE PLANTES

(30) Priority: 03.09.2015 NL 1041459
(43) Date of publication of application: 08.03.2017
(73) Proprietor: M. Stolze Holding B.V., 2678 ME De Lier (NL)
(72) Inventor: Stolze, Martin, 2678 ME De Lier (NL)
(74) Representative: Ferguson, Alexander

(56) References cited:
- EP-A1- 1 922 917
- FR-A1- 2 431 249

## Description

### BACKGROUND OF THE INVENTION

The invention relates to a device and a method for cleaning plant pots.

In the course of cultivation, plant pots will become dirty with soil and/or mud. The sometimes grubby look may be an impediment to successful sales. It is therefore customary to clean plant pots before they are offered for sale to the consumer. This can be done using a hand brush and water, however, this requires a lot of effort and provides low capacity. Machines are available and have been invented for cleaning large quantities of plant pots, in which machines the plant pots to be washed are placed on a conveyor belt and then passed along one or more rotating brushes.

An example of such a machine has been described in EP 1.922.917, which machine comprises a conveyor belt, having an elongated brush on either side thereof, which brush rotates about a lying, in particular horizontal axis and to which water is dispensed, and a rope engaging the pot wall and being driven at a speed exceeding the speed of the conveyor belt in order to have the pots rotate about their pot axis. The distance from the rope belt to the brush can be adjusted, and therewith the brush pressure on the pots as well. In order to enable the brush to reach the circumferential wall of the pots over the full height, the conveyor belt is positioned at an ascending slope. The size of the angle of inclination can be adjusted, in order to be adapted to the height of the pots to be washed. When washing the plant pots using this machine, surfaces of the circumferential wall will only be engaged by the brush for a limited period of time. The top surfaces only in a first path section and the bottom surfaces only in an end path section. In case of truncated conical pot walls the rope's pressing force furthermore decreases the higher the position of the pots during conveying, due to the slope.

### SUMMARY OF THE INVENTION

It is an object of the invention to provide a device and method for cleaning plant pots with which the pot walls can be cleaned reliably.

It is an object of the invention to provide a device and method for cleaning plant pots with which the pot walls can be cleaned efficiently.

It is an object of the invention to provide a device and method for cleaning plant pots with which the pot walls can be cleaned thoroughly.

For achieving at least one of these objects, according to one aspect, the invention provides a device for cleaning the outer surface of the circumferential wall of plant pots, comprising:
- a frame;
- a pot track arranged on the frame, which track extends from an input end to an output end and forms a support surface for the plant pots;
- movement means for moving the plant pots from the input end to the output end;
- rotation means for rotating the plant pots about their pot axis during said movement;
- a brush for brushing the outer surface of the circumferential wall of the plant pots during said movement;
- first brush driving means for rotating the brush about a lying axis; and
- second brush driving means for moving the rotating brush up and down, while engaging the outer surface of the pot's circumferential wall, between a first position and a second position, wherein the first position is situated at a lower level than the second position.

Because of the rotatingly driven brush moving up and down along the outer surface of the pot wall, while the rotating pot is moved in a path along the brush, an effective cleaning of the circumferential wall of the pots is effected in a simple manner. The brush's diameter can remain within limits.

If the first brush driving means have been configured for having the brush rotate in the same direction, in both the upward stroke and in the downward stroke of the brush, the relative speed of the bristles with respect to the pot wall will in the upward stroke differ from the speed in the downward stroke, which may increase the effectiveness of brushing.

If water is supplied to the brush and/or the pot wall, there may be question of a pre-soaking effect on the dirt deposited on the pot wall that has not been removed in a first round of brushing.

If the brush is rotated both in the upward stroke and in the downward stroke of the brush with a vertically downward directional component at the location of the contact with the plant pots, the stability of the pots is enhanced and the spreading of dirt that has been brushed off can be kept within limits.

The set-up with a brush going up and down makes it easy to step up the cleaning, wherein the second brush driving means are configured for repeatedly moving the brush up and down in the period in which a plant pot is moved from the input end to the output end by the movement means.

For an easy adjustment to the height of the pots to be cleaned, the speed, the size and/or the level of the up-and-down stroke of the brush can be adjustable relative to the pot track. The height of the pot track can be adjustable as well.

In one embodiment the rotation means are configured for continuously rotating the plant pots about their pot axis during their movement from the input end to the output end. In one embodiment the rotation means are configured for intermittently rotating the plant pots about their pot axis during their movement from the input end to the output end.

The rotation means may comprise a circumferentially extending, elongated element, such as a belt, cord, chain or rope belt, which in an engagement path engages onto the circumferential wall of the plant pots, and comprise a drive for driving the elongated element in said engagement path. The driving direction of the elongated element onto the pots may be the same as the movement direction of the plant pots.

The movement means may comprise a driven belt conveyor, which forms the support surface for the plant pots, such as a flat belt conveyor, link belt conveyor, cord belt conveyor, etc.

The brush can be elongated and have a length of at least almost the distance between the input end and the output end. The lying axis of the brush can be parallel to the pot support surface of the pot track, in particular parallel to the movement direction of the pots on the pot track. The lying axis may include a small, for instance a few degrees, with the horizontal plane. In one embodiment, the lying axis is parallel to the horizontal plane. The lying axis may include a small angle, for instance a few degrees, with the movement direction of the pots, considered in projection on a horizontal plane.

According to a further aspect, the invention provides a method for cleaning the outer surface of the circumferential wall of plant pots, comprising the following steps:
- moving the plant pots in series on a pot track;
- using a rotating brush for brushing the outer surface of the circumferential wall of the plant pots during their movement on the pot track;
- rotating the plant pots about their pot axis during their said movement to allow the brush to be active all around the outer surface of the circumferential wall; and
- moving the brush up and down during brushing.

The up-and-down stroke may extend over the height of the circumferential wall of the pot to be cleaned, between the bottom edge and upper edge of the pot. If the pot wall needs to be cleaned mainly in an upper or a lower section, the stroke can be adapted thereto. Usually the lower section will be dirtiest.

In one embodiment the brush is moved up and down between a first position in which the axis of the brush is at least almost at the same height as the bottom edge of the pot wall and a second position in which the axis of the brush is located at a higher level and the brush engages the pot wall at a distance from the bottom edge. In one embodiment, in the second position the brush axis is at least almost at the same height as the upper edge of the pot wall.

During the movement of a plant pot over the pot track the brush can be moved up and down relative to said plant pot several times.

The brush can be rotated in a rotation direction that is downward where the plant pots are being engaged by the brush. If the circumferential speed of the brush, where it engages the outer surface of the circumferential wall of the pot, exceeds the largest speed with which the brush is moved upwards, the bristles will always exert a downward force onto the plant pot.

During their movement over the pot track, the plant pots can be continuously rotated about their pot axis. In another embodiment, the plant pots can be intermittently rotated about their pot axis during their movement over the pot track.

In one embodiment water is dispensed to the brush and/or the plant pots for washing the outer surface of the circumferential wall of the plant pots.

The brush may be straight circle cylindrical. In another embodiment, the brush may be slightly truncated with a circular cross section.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### BRIEF DESCRIPTION OF THE DRAWINGS□

The invention will be elucidated on the basis of an exemplary embodiment shown in the attached drawings, in which:
Figure 1 shows an isometric view of an exemplary embodiment of a plant pot cleaner according to the invention;

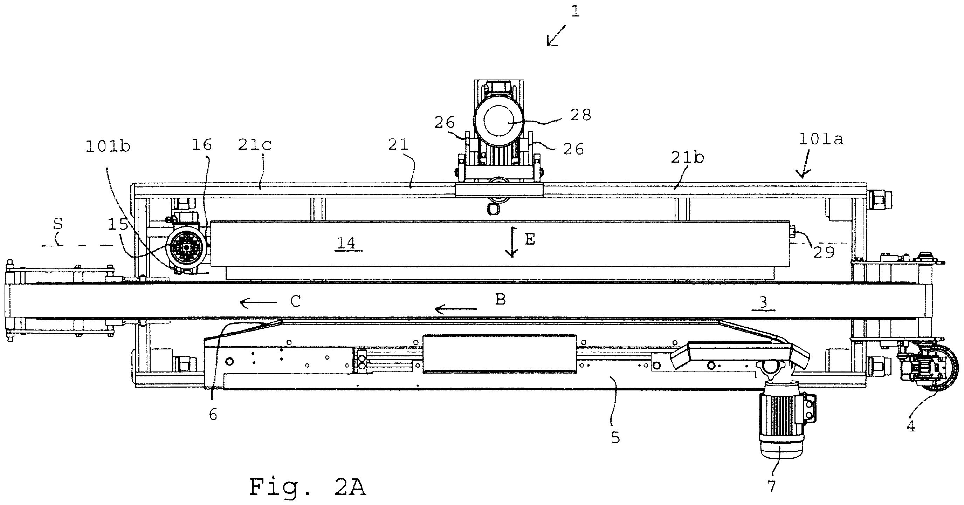

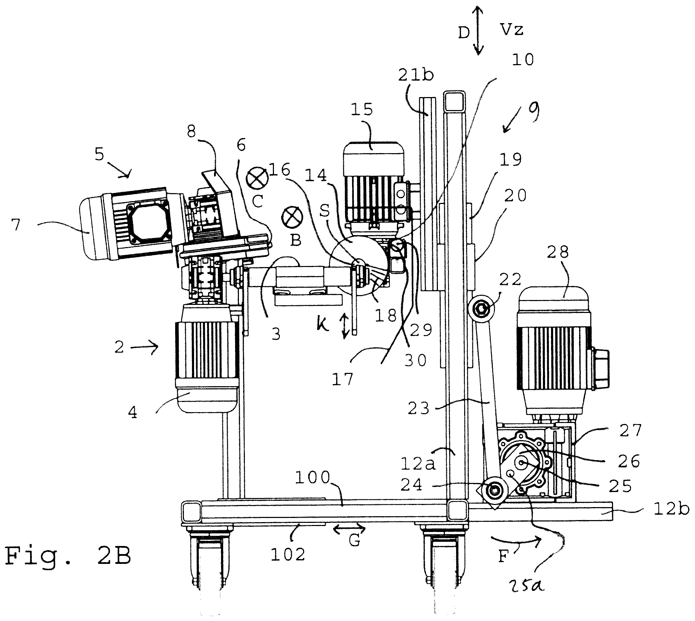

Figures 2A and 2B show a top view and an end view of the device of figure 1, respectively; and
Figures 3A-C show a top view, and two end views of the device of figure 1, respectively, during use.

### DETAILED DESCRIPTION OF THE DRAWINGS□

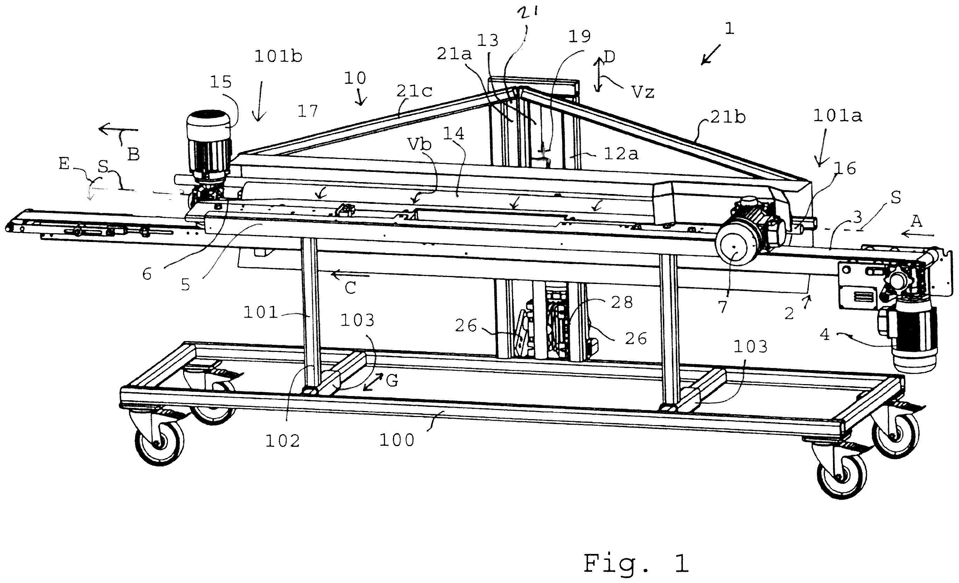

The device 1 in figure 1 comprises a frame 100, to be positioned on a floor, on which frame are supported a belt conveyor 2, a pot rotation device 5 and a brushing device 9.

The belt conveyor 2 comprises a belt 3 for supporting pots, which belt extends horizontally and forms a pot track between an input end 101a and an output end 101b, and which is driven by an electromotor 4, in the direction B.

The pot rotation device 5 is positioned adjacent to and diagonally over the belt 3 and comprises a rope belt 6 driven by an electromotor 7 in direction C. The pot rotation device 5 is supported on the frame 100 via columns 101 and tubes 102. The tubes 102 can be shifted on transverse tubes 103 of frame 100 and can be secured at the wanted location in order to adjust the horizontal distance of the rope belt 6 to the belt 3, direction G, depending on the pot size. A splashboard 8 screens off the motor 7 from the water and dirt released during the cleaning of pots.

The brushing device 9 comprises a brushing unit 10 having a straight circle-cylindrical brush 14 with bristles 18, that has been attached to a shaft 16 having a horizontal brush axis S, extending parallel to the pot support surface of the belt 3. The shaft 16 and therefore the brush 14 is rotatable at a speed Vb in direction E by an electromotor 15. The brushing unit 10 further comprises a splashboard 17.

The brushing device 9 further comprises a holder 11 for the brushing unit 10. Said holder 11 comprises an upright frame 12a and a base 12b attached to the frame 100. The upright frame 12a comprises a vertical guide 13, over which a sleeve 19 can be slid up and down in directions D. A ring 20 has been attached to the sleeve 19, on which ring a frame 21 has been attached. The frame 21 comprises a column 21a and two shores 21b,c. The brushing unit 10 has been attached to the frame 21. Via a hinge 22 and a link rod 23 at hinge 24, the sleeve 19 has been connected to crank arm 26. The crank arm 26 has been attached to a drive shaft 25 which through the intermediary of transmission 27 is driven in direction F by electromotor 28. Rotation of the crank arm 26 thus results in an up-and-down motion D of the brushing unit 10.

The brushing unit 9 has further been provided with a water supply pipe 29 extending alongside the brush 14, which has been provided with a series of holes 30 for dispensing water to the upper side of the brush 14, distributed over its length.

In operation the plant pots P to be cleaned are supplied over a supply conveyor that is not shown in the direction A, and they are transferred to the input end 101a of the belt conveyor 2.

The outer surface of the circumferential wall (the sidewall) of the plant pots P is engaged at the one side by the brush 14, and at the other side by the rope belt 6. As in the direction C the rope belt 6 has a speed that differs from the speed of the belt 3 in direction B, for instance exceeding it, wherein for instance the rope belt can have a speed of 15 m/min and the belt a speed of 10 m/min, the pots P are rotated once or several times about their (vertical) pot axis T, direction H, during conveying in direction B. The pot axis is perpendicular to the pot bottom.

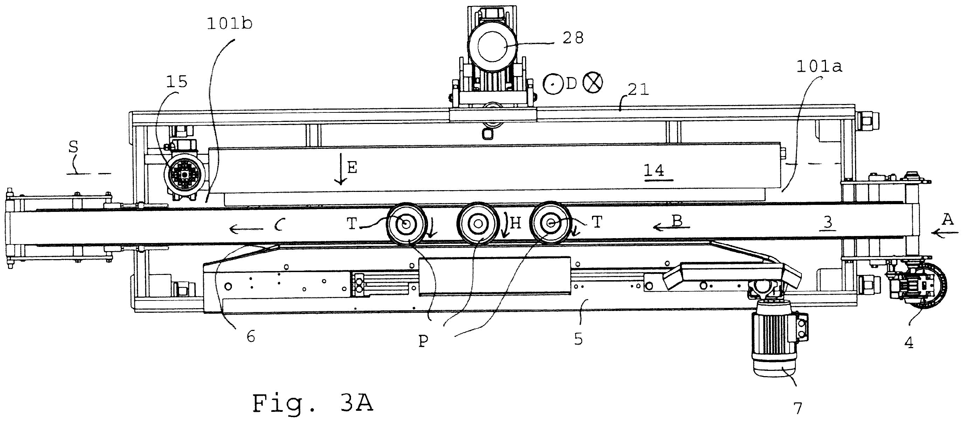

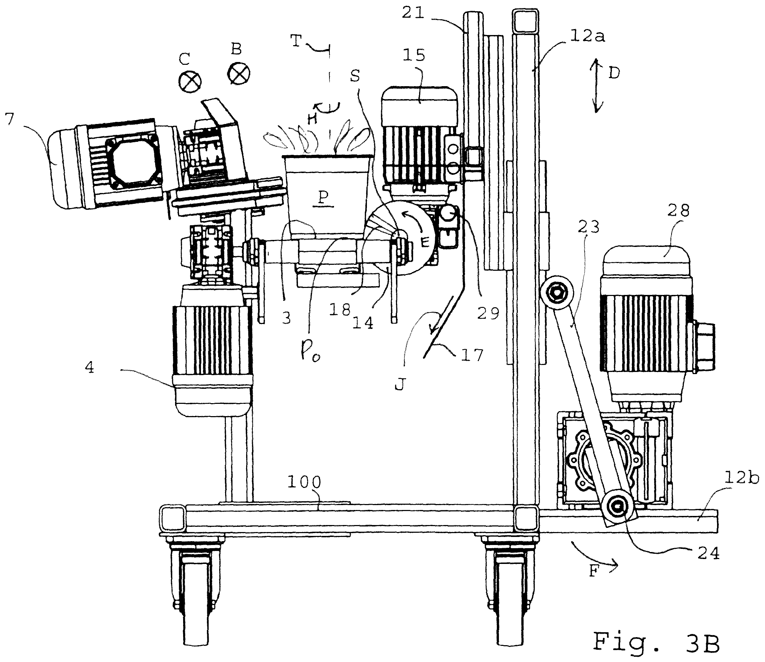

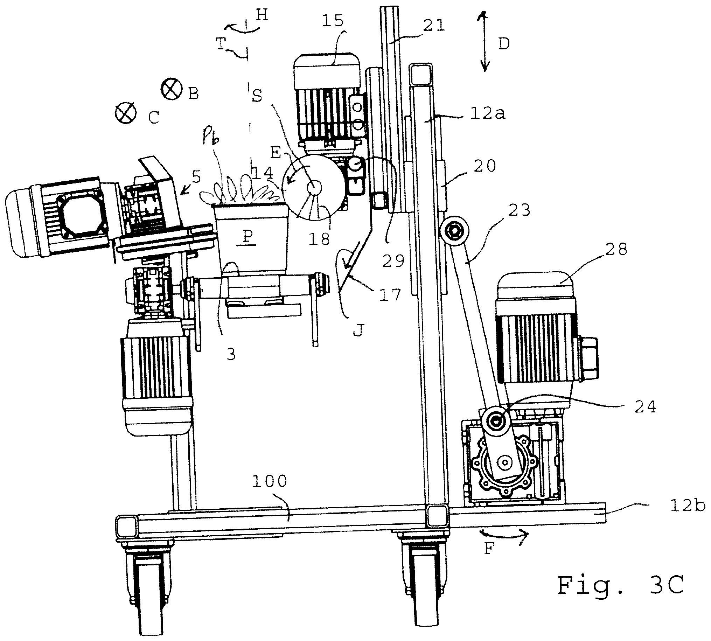

During conveying the plant pots P from the input end 101a to the output end 101b (figures 3A-C, in figure 3A the plants have been left out), the brush 14 is rotated in direction E, and moreover the brushing unit 10 is moved up and down, directions D, between a low position (figure 3B) in which the brush axis S is at the same height as the bottom edge Po of the pot wall and a high position (figure 3C) in which the brush axis S is at the same height as the upper edge Pb of the pot wall. The pots for instance have a diameter of 14 cm and a height of 14 cm. The brush is for instance rotated at a circumferential speed Vb of 30m/min (measured at the normal brush outer surface). This process takes place at a speed Vz (vertical speed when passing through the mid-position of the up-and-down motion), of for instance 20 m/min, which is chosen such that during the time in which a pot P is moved from the input end 101a to the output end 101b the brush 14 has been moved up and down along the outer surface of the circumferential wall of the pots several times. In the rotation of the brush, the bristles 18 are moved downwards along the outer surface of the pots P. The brush circumferential speed Vb, in particular the (downward) speed of the brush where the bristles contact the outer surface of the circumferential wall of the pot, exceeds Vz so that the brush at all times exerts a downward force on the outer surface of the circumferential walls of the pots.

In that way each location at the outer surface of the circumferential wall of each pot P is brushed once or several times, at intervals, and effectively cleaned, in particular when water is also supplied to the brush and/or pots.

Dirty water flows down along splashboard 17 in direction J, wherein the splashboard 17 extends downwards to such an extent that also in the uppermost position of the brushing unit 10 the bottom edge of splashboard 17 is below the belt 3.

The speed of the belt 3, rope belt 6, the rotation speed of the brush 14, the up-and-down stroke of the brush 14 and the speed of the up-and-down motion can be adjusted, in order to be adapted to the pot sizes and the degree of filthiness of the pots. By way of example the crank arm 26 has been provided with a second hole 25a for drive shaft 25 if the up-and-down stroke needs to be smaller. The height of the belt 3 can be adjusted as well, directions K.

The above description is included to illustrate the operation of preferred embodiments of the device. The scope of the invention is defined by the appended claims.

## Claims

1. Device for cleaning the outer surface of the circumferential wall of plant pots, comprising:
- a frame (100);
- a pot track arranged on the frame, which track extends from an input end (101a) to an output end (101b) and forms a support surface for the plant pots;
- movement means (2) for moving the plant pots from the input end to the output end;
- rotation means (5) for rotating the plant pots about their pot axis;
- a brush (14) for brushing the outer surface of the circumferential wall of the plant pots during said movement;
- first brush driving means (15) for rotating the brush about a lying axis; and
- second brush driving means (28) for moving the rotating brush up and down,
while engaging the outer surface of the pot's circumferential wall, between a first position and a second position, wherein the first position is situated at a lower level than the second position.

2. Device according to claim 1, wherein the first and the second brush driving means are operable for simultaneous action.

3. Device according to claim 1 or 2, wherein the first brush driving means are configured for both in the upward stroke and in the downward stroke of the brush having the brush rotate with a vertical downward directional component at the location of the contact with the plant pots.

4. Device according to claim 1, 2 or 3, wherein the second brush driving means are configured for repeatedly moving the brush up and down in the period in which a plant pot is moved from the input end to the output end by the movement means.

5. Device according to any one of the preceding claims, wherein the speed, the size and/or the level of the up-and-down stroke of the brush is adjustable relative to the pot track.

6. Device according to any one of the preceding claims, wherein the rotation means are configured for continuously rotating the plant pots during their movement from the input end to the output end, wherein, preferably, the rotation means comprise a circumferentially extending, elongated element, such as a belt, cord, chain or rope belt, which in an engagement path engages onto the circumferential wall of the plant pots, and comprise a drive for driving the elongated element in said engagement path in a direction that is the same as the movement direction of the plant pots.

7. Device according to any one of the preceding claims, wherein the movement means comprise a driven belt conveyor, which forms the support surface for the plant pots.

8. Device according to any one of the preceding claims, further comprising a water dispenser for providing water for the brushing process.

9. Device according to any one of the preceding claims, wherein the brush is elongated and has a length of at least almost the distance between the input end and the output end.

10. Device according to any one of the preceding claims, wherein the lying axis of the brush is parallel to the pot support surface of the pot track, in particular parallel to the movement direction of the pots on the pot track.

11. Method for cleaning the outer surface of the circumferential wall of plant pots, comprising the following steps:
- moving the plant pots in series on a pot track;
- using a rotating brush for brushing the outer surface of the circumferential wall of the plant pots during their movement on the pot track;
- rotating the plant pots about their pot axis, preferably continuously rotating the plant pots about their pot axis during their movement over the pot track, to allow the brush to be active all around the outer surface of the circumferential wall; and
- moving the brush up and down during brushing.

12. Method according to claim 11, wherein the brush is moved up and down between a first position in which the axis of the brush is at least almost at the same height as the bottom edge of the pot wall and a second position in which the brush axis is at a higher level such that the brush engages the pot wall at a distance from the bottom edge, wherein, preferably, the second position is at least almost at the same height as the upper edge of the pot wall.

13. Method according to claim 11 or 12, wherein during the movement of a plant pot over the pot track the brush is moved up and down relative to said plant pot several times.

14. Method according to any one of the claims 11-13, wherein the brush is rotated in rotation direction that is downward where the plant pots are being engaged by the brush, wherein, preferably, the circumferential speed at the circumference of the brush, where it engages the outer surface of the circumferential wall of the pot, exceeds the largest speed with which the brush is moved upwards.

15. Method according to any one of the claims 11-14, wherein water is dispensed to the brush and/or the plant pots for washing the outer surface of the circumferential wall of the plant pots.

## Patentansprüche

1. Vorrichtung zum Reinigen der Außenfläche der Umfangswand von Pflanzentöpfen, umfassend:
- ein Gestell (100);
- eine Topfbahn, die auf dem Gestell angeordnet ist, wobei sich die Bahn von einem Eingabeende (101a) zu einem Ausgabeende (101b) erstreckt und eine Trägerfläche für die Pflanzentöpfe bildet;
- Bewegungsmittel (2) zum Bewegen der Pflanzentöpfe von dem Eingabeende zu dem Ausgabeende;
- Drehmittel (5) zum Drehen der Pflanzentöpfe um ihre Topfachse;
- eine Bürste (14) zum Bürsten der Außenfläche der Umfangswand der Pflanzentöpfe während der Bewegung;
- erste Bürstenantriebsmittel (15) zum Drehen der Bürste um eine liegende Achse; und
- zweite Bürstenantriebsmittel (28)
zum Bewegen der sich drehenden Bürste nach oben und nach unten, während des Erfassens der Außenfläche der Umfangswand des Topfes, zwischen einer ersten Position und einer zweiten Position, wobei sich die erste Position auf einem niedrigeren Niveau befindet als die zweite Position.

2. Vorrichtung nach Anspruch 1, wobei die ersten und die zweiten Bürstenantriebsmittel zur gleichzeitigen Tätigkeit betriebsfähig sind.

3. Vorrichtung nach Anspruch 1 oder 2, wobei die ersten Bürstenantriebsmittel ausgelegt sind, sowohl in dem Aufwärtshub als auch in dem Abwärtshub der Bürste die Bürste mit einer vertikalen Abwärts-Richtungskomponente an der Stelle des Kontakts mit den Pflanzentöpfen drehen zu lassen.

4. Vorrichtung nach Anspruch 1, 2 oder 3, wobei die zweiten Bürstenantriebsmittel ausgelegt sind, die Bürste in dem Zeitraum, in dem ein Pflanzentopf von den Bewegungsmitteln von dem Eingabeende zu dem Ausgabeende bewegt wird, wiederholt nach oben und nach unten zu bewegen.

5. Vorrichtung nach einem der vorhergehenden Ansprüche, wobei die Geschwindigkeit, die Größe und/oder das Niveau des Auf-und-ab-Hubs der Bürste bezogen auf die Topfbahn einstellbar ist.

6. Vorrichtung nach einem der vorhergehenden Ansprüche, wobei die Drehmittel zum durchgehenden Drehen der Pflanzentöpfe während ihrer Bewegung von dem Eingabeende zu dem Ausgabeende ausgelegt sind, wobei vorzugsweise die Drehmittel ein längliches Element umfassen, das sich in Umfangsrichtung erstreckt, wie beispielsweise ein Band, einen Strang, eine Kette oder einen Gurtriemen, das in einem Erfassungsweg die Umfangswand der Pflanzentöpfe erfasst, und einen Antrieb zum Antreiben des länglichen Elements in dem Erfassungsweg in eine Richtung umfassen, die dieselbe wie die Bewegungsrichtung der Pflanzentöpfe ist.

7. Vorrichtung nach einem der vorhergehenden Ansprüche, wobei die Bewegungsmittel einen angetriebenen Bandförderer umfassen, der die Trägerfläche für die Pflanzentöpfe bildet.

8. Vorrichtung nach einem der vorhergehenden Ansprüche, ferner umfassend eine Wasserabgabeeinrichtung zum Bereitstellen von Wasser für den Vorgang des Bürstens.

9. Vorrichtung nach einem der vorhergehenden Ansprüche, wobei die Bürste länglich ist und eine Länge von zumindest annähernd dem Abstand zwischen dem Eingabeende und dem Ausgabeende aufweist.

10. Vorrichtung nach einem der vorhergehenden Ansprüche, wobei die liegende Achse der Bürste parallel zu der Topfträgerfläche der Topfbahn, insbesondere parallel zu der Bewegungsrichtung der Töpfe auf der Topfbahn ist.

11. Verfahren zum Reinigen der Außenfläche der Umfangswand von Pflanzentöpfen, umfassend die folgenden Schritte:
- Bewegen der Pflanzentöpfe in Reihe auf einer Topfbahn;
- Nutzen einer sich drehenden Bürste zum Bürsten der Außenfläche der Umfangswand der Pflanzentöpfe während ihrer Bewegung auf der Topfbahn;
- Drehen der Pflanzentöpfe um ihre Topfachse, vorzugsweise durchgehendes Drehen der Pflanzentöpfe um ihre Topfachse während ihrer Bewegung über die Topfbahn, um es der Bürste zu erlauben, ganz um die Außenfläche der Umfangswand herum tätig zu sein; und
- Bewegen der Bürste nach oben und nach unten während des Bürstens.

12. Verfahren nach Anspruch 11, wobei die Bürste zwischen einer ersten Position, in der sich die Achse der Bürste zumindest annähernd auf derselben Höhe wie die Unterkante der Topfwand befindet, und einer zweiten Position, in der sich die Bürstenachse auf einem höheren Niveau befindet, so dass die Bürste die Topfwand in einem Abstand zu der Unterkante erfasst, nach oben und nach unten bewegt wird, wobei sich vorzugsweise die zweite Position zumindest annähernd auf derselben Höhe wie die Oberkante der Topfwand befindet.

13. Verfahren nach Anspruch 11 oder 12, wobei während der Bewegung eines Pflanzentopfes über die Topfbahn die Bürste bezogen auf den Pflanzentopf mehrere Male nach oben und nach unten bewegt wird.

14. Verfahren nach einem der Ansprüche 11 bis 13, wobei die Bürste in Drehrichtung gedreht wird, die abwärts ist, wo die Pflanzentöpfe von der Bürste erfasst werden, wobei vorzugsweise die Umfangsgeschwindigkeit an dem Umfang der Bürste, wo sie die Außenfläche der Umfangswand des Topfes erfasst, die größte Geschwindigkeit übersteigt, mit der die Bürste aufwärts bewegt wird.

15. Verfahren nach einem der Ansprüche 11 bis 14, wobei Wasser auf die Bürste und/oder die Pflanzentöpfe gegeben wird, um die Außenfläche der Umfangswand der Pflanzentöpfe zu waschen.

## Revendications

1. Dispositif pour nettoyer la surface extérieure de la paroi circonférentielle de pots de plantes, comprenant:
- un cadre (100);
- une piste de pots agencée sur le cadre, ladite piste s'étendant à partir d'une extrémité d'entrée (101a) jusqu'à une extrémité de sortie (101b) et formant une surface de support pour les pots de plantes;
- des moyens de déplacement (2) pour déplacer les pots de plantes à partir de l'extrémité d'entrée jusqu'à l'extrémité de sortie;
- des moyens de rotation (5) pour faire tourner les pots de plantes autour de leur axe de pot;
- une brosse (14) pour brosser la surface extérieure de la paroi circonférentielle des pots de plantes pendant ledit déplacement;
- des premiers moyens d'entraînement de brosse (15) pour faire tourner la brosse autour d'une axe horizontal; et
- des seconds moyens d'entraînement de brosse (28) pour déplacer la brosse rotative vers le haut et vers le bas, tout en engageant la surface extérieure de la paroi circonférentielle des pots, entre une premiers position et une seconde position, dans lequel la première position est située à un niveau inférieur à celui de la seconde position.

2. Dispositif selon la revendication 1, dans lequel les premiers et les seconds moyens d'entraînement de brosse sont actionnables pour exécuter une action simultanée.

3. Dispositif selon la revendication 1 ou 2, dans lequel les premiers moyens d'entraînement de brosse sont configurés de telle sorte que, à la fois dans la course ascendante et dans la course descendante de la brosse, la brosse tourne avec une composante directionnelle verticale vers le bas à l'endroit du contact avec les pots de plantes.

4. Dispositif selon la revendication 1, 2 ou 3, dans lequel les seconds moyens d'entraînement de brosse sont configurés de manière à déplacer de façon répétée la brosse vers le haut et vers le bas pendant la période pendant laquelle un pot de plantes est déplacé à partir de l'extrémité d'entrée jusqu'à l'extrémité de sortie par les moyens de déplacement.

5. Dispositif selon l'une quelconque des revendications précédentes, dans lequel la vitesse, la dimension et/ou le niveau de la course vers le haut et vers le bas de la brosse est (sont) réglable(s) par rapport à la piste de pots.

6. Dispositif selon l'une quelconque des revendications précédentes, dans lequel les moyens de rotation sont configurés de manière à faire tourner de façon continue les pots de plantes pendant leur déplacement à partir de l'extrémité d'entrée jusqu'à l'extrémité de sortie, dans lequel, de préférence, les moyens de rotation comprennent un élément allongé s'étendant de façon circonférentielle, tel qu'une courroie, un câble, un chaîne ou une sangle, qui dans un chemin d'engagement s'engage sur la paroi circonférentielle des pots de plantes, et comprennent un dispositif d'entraînement pour entraîner l'élément allongé dans ledit chemin d'engagement dans une direction qui est la même que la direction de déplacement des pots de plantes.

7. Dispositif selon l'une quelconque des revendications précédentes, dans lequel les moyens de déplacement comprennent un convoyeur à courroie entraînée, qui forme la surface de support pour les pots de plantes.

8. Dispositif selon l'une quelconque des revendications précédentes, comprenant en outre un distributeur d'eau pour fournir de l'eau pour le processus de brossage.

9. Dispositif selon l'une quelconque des revendications précédentes, dans lequel la brosse est allongée et présente une longueur qui est au moins pratiquement équivalente à la distance entre l'extrémité d'entrée et l'extrémité de sortie.

10. Dispositif selon l'une quelconque des revendications précédentes, dans lequel l'axe horizontal de la brosse est parallèle à la surface de support de pots de la piste de pots, en particulier parallèle à la direction de déplacement des pots sur la piste de pots.

11. Procédé pour nettoyer la surface extérieure de la paroi circonférentielle de pots de plantes, comprenant les étapes suivantes:
- déplacer les pots de plantes en série sur une piste de pots;
- utiliser une brosse rotative pour brosser la surface extérieure de la paroi circonférentielle des pots de plantes pendant leur déplacement sur la piste de pots;
- faire tourner les pots de plantes autour de leur axe de pot, de préférence faire tourner de façon continue les pots de plantes autour de leur axe de pot pendant leur déplacement sur la piste de pots, de manière à permettre à la brosse d'être active tout autour de la surface extérieure de la paroi circonférentielle; et
- déplacer la brosse vers le haut et vers le bas pendant le brossage.

12. Procédé selon la revendication 11, dans lequel la brosse est déplacée vers le haut et vers le bas entre une première position dans laquelle l'axe de la brosse se situe pratiquement à la même hauteur que le bord inférieur de la paroi des pots, et une seconde position dans laquelle l'axe de la brosse se situe à un niveau supérieur de telle sorte que la brosse engage la paroi des pots à une certaine distance du bord inférieur, dans lequel, de préférence, la seconde position se situe au moins pratiquement à la même hauteur que le bord supérieur de la paroi des pots.

13. Procédé selon la revendication 11 ou 12, dans lequel pendant le déplacement d'un pot de plantes sur la piste de pots, la brosse est déplacée plusieurs fois vers le haut et vers le bas par rapport audit pot de plantes.

14. Procédé selon l'une quelconque des revendications 11 à 13, dans lequel la brosse est mise en rotation dans un sens de rotation qui est orienté vers le bas à l'endroit où les pots de plantes sont engagés par la brosse, dans lequel, de préférence, la vitesse circonférentielle à la circonférence de la brosse, à l'endroit où elle engage la surface extérieure de la paroi circonférentielle du pot, dépasse la vitesse la plus élevée à laquelle la brosse est déplacée vers le haut.

15. Procédé selon l'une quelconque des revendications 11 à 14, dans lequel de l'eau est distribuée à la brosse et/ou aux pots de plantes afin de laver la surface extérieure de la paroi circonférentielle des pots de plantes.
